# EUROPÄISCHE PATENTANMELDUNG

(11) **EP 4 603 718 A1**
(43) Veröffentlichungstag der Anmeldung: **20.08.2025**
(21) Anmeldenummer: 25155727.8
(22) Anmeldetag: 04.02.2025
(51) Int. Cl.: F16D 69/02, F16D 65/22

(54) **REIBBELAG FÜR TROMMELBREMSEN**

(30) Priorität: 14.02.2024 DE 102024104119
(71) Anmelder: TMD Friction Services GmbH, 51381 Leverkusen (DE)
(72) Erfinder: Borgmeier, Olav, 42499 Hückeswagen (DE); Reese, Michael, 51515 Kürten (DE)
(74) Vertreter: Weckenbrock, Matthias

(57) **Zusammenfassung**

Die Erfindung betrifft eine Reibbelagmischung zur Herstellung eines Bremsbelags für Trommelbremsen umfassend
mindestens 15 Gew.-% Metallfasern, bevorzugt Stahlfasern, insbesondere Stahlwolle,
mindestens 7 Gew.-% Glasfasern, in der Form von Glasfaserbündeln, mindestens 4 Gew.-% Harz und
mindestens 2 Gew.-% Reibkörner, bevorzugt mit einer Mohs-Härte von gleich oder größer als 9, sowie einen daraus hergestellten Reibbelag und Trommelbremsbelag sowie ein Verfahren zur Herstellung eines Trommelbremsbelags.

## Beschreibung

Die vorliegende Erfindung betrifft Reibbelagmischungen und daraus hergestellte Reibbeläge, die insbesondere für den Einsatz in Trommelbremsen geeignet sind. Ferner umfasst die Erfindung ein Verfahren zur Herstellung solcher Reibbeläge und deren Verwendung.

Eine Trommelbremse stellt eine geschlossene und zylinderförmige Konstruktion dar. Die wichtigsten Komponenten einer Trommelbremse sind die zylinderförmige Bremstrommel, die Bremsbacken und der Radzylinder. Der Radzylinder wird beim Bremsvorgang an die feststehenden Bremsbacken gedrückt und presst die Bremsbacken so an die Bremstrommel, wodurch diese abgebremst wird.

Die Bremsbacken dienen in erster Linie als Träger des Reibmaterials bzw. als Träger des oder der Reibbeläge. Aufgrund der zylinderförmigen Bremstrommel, gegen die die Bremsbacken (Belagträgerplatte mit Reibbelag) von innen gedrückt werden, müssen sowohl die Belagträgerplatte und insbesondere auch der Reibbelag eine Form aufweisen, die sich möglichst ideal an die Innenwand der Bremstrommel anlegt, d.h. deren Form aufnimmt. Daher weisen Reibbeläge oder Reibmaterialien für Trommelbremsen eine dafür notwendige Fließfähigkeit auf, um die notwendige sichelförmige Form im Formgebungsprozess (beim Pressen des Reibmaterials/der Reibbelagmischung) anzunehmen.

Obwohl die reibtechnischen Eigenschaften von Trommelbremsbelägen oft hinter denen von Scheibenbremsbelägen zurückbleiben, bieten Trommelbremsen gegenüber Scheibenbremsen auch einige Vorteile, wie z.B. eine gekapselte Bremse, die geschützt gegen Verschmutzungen ist und weniger Bremsstaub in die Umwelt entlässt und eine gewünschte Langlebigkeit aufweist.

Im Stand der Technik sind die verschiedensten Reibbeläge bekannt, die für Scheiben- und/oder Trommelbremsbeläge für PKW oder LKW und als Kupplungsbeläge verwendet werden können.

DE-OS 2 023 227 beschreibt den Einsatz von Glasfasern in Bremsbackenbelägen mit gebogener Bremsfläche.

DE 10 2021 204 132 A1 bezieht sich auf eine Trommelbremse für ein KFZ, bei der die Bremsbeläge Stahlwolle enthalten.

Gegenstand der EP 0 050 377 B1 ist ein asbestfreies Reibmaterial, welches Aramidfasern, Stahlfasern und Mineralfasern umfasst. Neben verschiedenen anderen Materialien können als Mineralfasern auch Glasfasern eingesetzt werden. Die Elastizität der resultierenden Reibbeläge lässt sich durch Variation der verwendeten Bindemittel einstellen.

EP 2 270 353 A2 offenbart Reibbelagmischungen für einen Reibbelag für Brems- und Kupplungsbeläge, welche eine Vielzahl von Bestandteilen u.a. Harz, Stahlwolle, einen geringen Anteil an Glasfasern und auch Reibpartikel in geringer Menge enthalten können, und denen zur Steigerung der Leistungsfähigkeit metallisches Zinn zugesetzt wird. Anwendungsgebiet sind Brems- und Kupplungsbeläge.

Die oben genannten Dokumente stellen nur einen kleinen Teil des Standes der Technik auf dem Gebiet der Reibbelagmischungen und Reibbeläge für Scheiben- und Trommelbremsbeläge und für Kupplungsbeläge dar.

Grundsätzlich lässt sich feststellen, dass Reibbeläge für Scheiben- und Trommelbremsen verschiedene Zusammensetzungen aufweisen. Beide Typen enthalten zur Armierung (Erhöhung der inneren Festigkeit eines Reibbelags) Stahlwolle oder Stahlfasern und/oder Metallfasern, wie z.B. Kupfer- oder Zinkfasern.

Scheibenbremsreibbeläge (auch als Scheibenbremsbeläge bezeichnet) enthalten in der Regel zwischen 20 und 30 Gew.-% an Stahlfasern zur Armierung und nicht wesentlich mehr als ca. 5 Gew.-% an Harz. Bei in Serie gefertigten Scheibenbremsbelägen werden in der Regel keine Glasfaserbündel als Reibbelagkomponente eingesetzt.

Die Reibbeläge von Trommelbremsbelägen enthalten oft 5-10 Gew.-% an Glasfaserbündeln zur Armierung und deutlich mehr Harz (ca. 10-15 Gew.-%). Es gibt auch Bremsbeläge für Trommelbremsen, bei denen der Reibbelag Stahlwolle enthält, um die Reibeigenschaften zu verbessern. In diesen Fällen enthalten diese Reibbeläge dann aber auch Flockengraphit und/oder ein Schichtsilikat (z.B. Vermiculit) und eine erhöhte Harzmenge, um die Fließfähigkeit der Reibbelagmasse sicherzustellen, damit der gebildete Reibbelag die für Trommelbremsbeläge notwendige sichelförmige Form annimmt.

Die Fließfähigkeit eines Reibmaterials lässt sich grundsätzlich beeinflussen durch verschiedene Bindeharztypen, einen variierenden Gehalt an Bindeharz und auch durch Feststoffe, die glatt sind und gute Gleiteigenschaften aufweisen. Hierzu zählen z.B. Glasfaserbündel, Schichtsilikate und Flockengraphit. Allerdings kann z.B. der Einsatz von Schichtsilikaten und Flockengraphiten zu Fertigungsschwierigkeiten und zu langen Presszeiten führen.

Vor diesem Hintergrund lag der vorliegenden Erfindung die Aufgabe zugrunde, ein Reibmaterial/Reibbelag für eine Trommelbremse (bzw. einen Bremsbelag bestehend aus Belagträgerplatte und Reibbelag) zur Verfügung zu stellen, der möglichst verbesserte Reibeigenschaften (z.B. Reibwerte) und gleichzeitig eine ausreichende bis verbesserte Fließfähigkeit aufweist, damit der gebildete Reibbelag die verlangte Sichelform stabil und ohne Risse annimmt und damit auch vollflächig und eng an der Bremstrommel anliegt. Um eine möglichst einfache Fertigung eines solchen Trommelbremsbelags zu gewährleisten, sollte der Reibbelag bevorzugt ohne Kleber und ohne Zwischenschicht direkt auf die Belagträgerplatte aufgepresst werden können. Die Anbindung des Reibbelags an die Belagträgerplatte erfolgt bevorzugt durch die Reibmaterialien selbst.

Gelöst wird diese Aufgabe mit ihren verschiedenen Teilaspekten durch die Reibbelagmischungen gemäß dem Anspruch 1 und daraus hergestellte Reibbeläge für Trommelbremsen. Bevorzugte Ausgestaltungen der Erfindung sind in den Unteransprüchen angegeben.

Die vorliegende Erfindung betrifft somit Reibbelagmischungen, die durch eine spezielle Kombination aus Metallfasern, Glasfaserbündel, Harz und Reibkörner gekennzeichnet sind.

Die Reibbelagmischungen umfassen bevorzugt mindestens 15 Gew.-% Metallfasern, insbesondere Stahlfasern, und diese bevorzugt in Form von Stahlwolle, mindestens 7 Gew.-% Glasfasern, die in Form von Glasfaserbündeln der Reibbelagmischung zugesetzt werden, mindestens 4 Gew.-% an Binderharz und mindestens 2 Gew.-% Reibkörner.

Besonders bevorzugt sind Reibbelagmischungen, welche die folgenden Komponenten umfassen:
- Metallfasern, bevorzugt Stahlfasern, insbesondere Stahlwolle 15-20 Gew.-%,
- Glasfasern, in Form von Glasfaserbündeln 7-10 Gew.-%,
- Bindeharz 4-9 Gew.-% und
- Reibkörner 2-10 Gew.-%.

Weitere bevorzugte erfindungsgemäße Ausgestaltungen betreffen Reibbelagmischungen, welche zusätzlich zu den oben genannten Komponenten Schwermetallsulfide aus der vierten oder fünften Hauptgruppe des Periodensystems, wie z.B. Sulfide von Zinn, Antimon und Bismuth in Mengen von größer oder gleich 2 Gew.-% enthalten.

Weiterhin sind die erfindungsgemäßen Reibbelagmischungen bevorzugt im Wesentlichen frei von Schichtsilikaten und Flockengraphit, oder enthalten solche Materialien zu weniger als 2 Gew.-%.

Die in dieser Anmeldung verwendeten Angaben von Gew.-% beziehen sich jeweils auf das Gewicht der fertigen Reibbelagmischung.

Bei den erfindungsgemäß verwendeten Reibkörnern handelt es sich bevorzugt um solche mit einer Mohs-Härte von größer oder gleich 9. Beispielhaft seien genannt: SiC (Mohs-Härte 9,5-9,75), Al₂O₃ (Mohs-Härte 9), B₄C (Mohs-Härte 9,3) und die verschiedenen Modifikationen von Si₃N₄ mit einer Mohs-Härte von 9. Diese Partikel werden bevorzugt in Partikelgrößen mit einem Durchmesser d50 von 3-150 µm verwendet. Die Partikelgrößen lassen sich durch Analysatoren, beispielsweise von der französischen Firma CILAS oder der deutschen Anton Paar GmbH erhältlich, bestimmen.

Als Metallfasern werden bevorzugt Stahl-, Edelstahl, Kupfer-, Messing-, oder Bronze-Fasern verwendet. Die Fasern sind bevorzugt als sehr kurze Fasen 0,1 mm bis 0,3 mm oder mittellange Fasern von 0,3 mm bis 0,5 mm Länge, z.B. in Spanform oder in Form von längeren Fasern bzw. Fäden mit über 0,5 mm Länge als Wolle ausgebildet. Die Metallfasern haben einen Durchmesser von vorzugsweise 0,05 bis 0,2 mm. Als Metallfasern können beispielsweise Kupferwolle oder Messingspäne verwendet werden.

Während vereinzelte Glasfasern mit unterschiedlichsten Ausrichtungen oft in Reibbelägen zur Erhöhung der Festigkeit bzw. Armierung eingesetzt werden, werden erfindungsgemäß Glasfaserbündel verwendet. Hierbei wird eine Vielzahl von einzelnen kurzen Glasfasern mit gleicher Ausrichtung in Bündeln zusammengefasst. In der erfindungsgemäßen Reibbelagmischung erhöhen die Glasfaserbündel die Fließfähigkeit. Vorzugsweise werden hierfür Fasern aus Quarzglas, Borsilikatglas, Aluminosilikatglas, Magnesiumaluminosilikatglas und/oder Calciumaluminosilikatglas verwendet. Die Glasfasern weisen vorzugsweise eine Länge von 1 bis 5 mm auf. Besonders bevorzugt weisen die Fasern eine Länge von 3 mm auf. Die Fasern haben bevorzugt einen Durchmesser von 0,5 bis 50 Mikrometer. Glasfaserbündel werden beispielsweise aus einer Glasschmelze hergestellt, indem diese durch Spinndüsen, welche z.B. aus Wolfram bestehen, gedrückt wird. Die Anzahl der Düsen bestimmt die Bündeldicke bzw. -breite. Die Düsen sind dabei in Reihe nebeneinander angeordnet. Man erhält daher glatte Plättchen. Die Glasfaserbündel sind beispielsweise 0,25 bis zu 2 mm breit. Anschließend wird der Bündelstrang geschnitten, z.B. auf 3 mm Länge. Weiterhin können die Bündel mit einer Schlichte versehen werden, die u.a. die Desintegrationsneigung verringert. Die verwendete Schlichte ist vom Hersteller abhängig und besteht aus einer Beschichtung und/oder einem Haftvermittler.

Das erfindungsgemäß verwendete Harz kann auf Natur- oder Kunstharzbasis ausgebildet sein. Bevorzugt werden Phenolharze verwendet. Es können ferner organische Kunstharze, wie beispielsweise Harze auf Kresol-, Alkyl-, CSNL-, Epoxid-, NBR-, Resorcin-, Aryl-, SBR- und CR-Basis verwendet werden. Ferner können anorganische Kunstharze, wie beispielweise Harze auf Bor-, Phosphor-, Silikon- und Chrom-Basis verwendet werden.

Schwermetallsulfide können bevorzugt von 2 bis 10 Gew.-% in der Reibbelagmischung enthalten sein. Diese Sulfide sind Hochtemperaturschmierstoffe und reduzieren den Heißverschleiß. Sie helfen auch dabei ein gutes Scheibenrissergebnis zu erzielen. Weiterhin glätten sie die Reibwerte und sind also ein probates Mittel gegen Druck- und Geschwindigkeitsfading.

Als weitere Bestandteile können bevorzugt 15-30 Gew.-% Kokse und Graphite in der Reibbelagmischung enthalten sein. Kokse stabilisieren die Performance des Reibbelags. Grafite tragen zur Schmierung und Verschleißminderung bei. Hierfür können Mahlgraphite und/oder Elektrodengraphite verwendet werden.

Bevorzugt 1-10 Gew.-% Kautschuk bzw. Gummi können auch in der Reibbelagmischung enthalten sein. Hierdurch wird eine verbesserte Dämpfung bzw. Geräuschminimierung und verbesserte Flexibilität des Reibebelags erreicht.

Ferner können bevorzugt 10-40 Gew.-% Mineralien in der Reibbelagmischung enthalten sein. Vorzugsweise werden kosteneffiziente Füllstoffe wie Kreide, Schwerspat, Magnesiumoxid, Schiefermehl, und Kaolin verwendet. Diese Füllstoffe wirken reibwertstützend und verschleißmindernd.

Besonders vorteilhaft ist es, dass die erfindungsgemäßen Reibbelagmischungen direkt auf die Belagträgerplatte aufgepresst werden können und dadurch eine ausreichend stabile Verbindung zwischen Reibbelag und Belagträgerplatte entsteht. Auf die Verwendung eines Klebers oder einer Zwischenschicht, die auf die Belagträgerplatte aufgebracht werden, kann erfindungsgemäß verzichtet werden. Auch separate mechanische Befestigungshilfsmittel, die mit der Belagträgerplatte verbunden sind, wie z.B. Schrauben, Bolzen oder Nieten, sind für eine hinreichend stabile Verbindung von Reibbelag und Belagträgerplatte nicht notwendig.

Die aus dem erfindungsgemäßen Reibmaterial hergestellten Reibbeläge weisen in Bezug auf Gleitreibung Reibwerte µ von mindestens 0,3, insbesondere von 0,4 bis 0,5, auf. Der Reibwert µ wird auch als Reibungskoeffizient oder Reibzahl bezeichnet. Die Bestimmung des Reibwerts erfolgt, wie z.B. in Wikipedia unter dem Stichwort Reibungskoeffizient im Absatz Berechnung der Reibungskraft beschrieben.

Wie ausgeführt, kann erfindungsgemäß das Reibmaterial ohne Kleber und ohne Zwischenschicht direkt auf die Belagträgerplatte bei erhöhtem Druck und erhöhter Temperatur aufgepresst und so direkt der Reibbelag bzw. der Bremsbelag/die Bremsbacke für die Trommelbremse erhalten werden.

Um die Stabilität der gebogenen Trommelbremsbeläge weiter zu erhöhen, kann die Trägerplatte/Belagträgerplatte eine oder mehrere Erhebungen und/oder Vertiefungen aufweisen, welche das Reibmaterial aufnehmen bzw. in die Reibmaterialschicht hineinragen und welche dadurch zur Aufnahme von tangentialen Kräften geeignet sind, die im Fahrbetrieb über den Reibbelag übertragen werden. Dabei ragen die Erhebungen, welche die gemäß dem Radius der Bremstrommel gebogene Trägerplatte aufweist, bis unterhalb einer vorgegebenen Verschleißgrenze in das Reibmaterial/den Reibbelag hinein.

Bevorzugte Ausführungsformen von erfindungsgemäßen Trägerplatten sind solche, bei denen die Trägerplatte mehrere flächige Vertiefungen aufweist, die gitterartig auf der Trägerplatte (auf der dem Reibbelag zugewandten Seite) angeordnet sind. Weiterhin sind Ausführungsformen der Belagträgerplatte bevorzugt, bei denen die Trägerplatte mehrere Erhebungen aufweist, die als Stifte ausgebildet sind und insbesondere solche Ausführungen, bei denen die Trägerplatte mehrere Reihen von Stiften aufweist, wobei die Stifte in einer Vielzahl oder in allen vorhandenen flächigen Vertiefungen angeordnet sind.

Gegenstand der vorliegenden Erfindung ist auch ein Verfahren zur Herstellung der erfindungsgemäßen Trommelbremsbeläge, bestehend aus Belagträgerplatte mit einer gekrümmten Oberfläche und darauf angeordnetem Reibbelag. Dazu werden eine Belagträgerplatte (mit entsprechend dem Radius der Bremstrommel gekrümmter Oberfläche, wodurch der Reibbelag später dicht an der Bremstrommel anliegt) und eine erfindungsgemäße fließfähige Reibbelagmischung bereitgestellt. Fließfähige Reibbelagmischung bedeutet, dass diese bei den Herstellungsbedingungen der Reibbeläge, d.h. bei der verwendeten Temperatur und dem angewandten Druck, fließfähig ist und sich dicht an die Oberfläche der Trägerplatte und gemäß der vorgegebenen Form anordnet bzw. anbinden lässt. Weiterhin sind nach dem Befüllen der Form mit der Reibbelagmischung keine gesonderten Maßnahmen zu deren Verteilung in der Form erforderlich. Nach dem Befüllen der Form mit der Reibbelagmischung wird die Trägerplatte direkt auf die Reibbelagmischung in der Form bei erhöhter Temperatur und erhöhtem Druck aufgepresst. Hierbei wird bevorzugt eine Temperatur von 140-180°C, ein Druck von 30-60 N/mm² in einem Zeitraum von 2-5 Minuten verwendet. Der Reibbelag wird anschließend gehärtet.

Es kann erfindungsgemäß vorgesehen sein, dass der so entstandene Reibbelag nach Entfernen aus der Form mit üblichen Methoden z.B. der mechanischen Bearbeitung (z.B. Schleifen) weiterbehandelt wird.

Schließlich umfasst die Erfindung die Verwendung der erfindungsgemäßen Reibbelagmischungen und der daraus gewonnenen Reibbeläge zur Herstellung von Trommelbremsbelägen.

Zusammenfassend kann festgestellt werden, dass sich die erfindungsgemäßen Reibmaterialien sowohl von solchen Materialien unterscheiden, die bei Scheibenbremsbelägen eingesetzt werden als auch von solchen, die bei Trommelbremsbelägen zum Einsatz kommen.

Als Beispiele bzw. Unterschiede zum Stand der Technik seien das Fehlen von Schichtsilikaten und Flockengraphiten sowie eine Harzmenge genannt, die für Scheibenbremsbeläge ungewöhnlich hoch jedoch für Trommelbremsbeläge eher niedrig ist. Auch werden in herkömmlichen Trommelbremsbelägen keine Schwermetallsulfide und auch keine Reibkörner mit einer Mohs-Härte von größer/gleich 9 verwandt. Schließlich findet sich die erfindungsgemäße mengenmäßige Kombination von Glasfaserbündeln und Metallfasern, insbesondere Stahlwolle, nicht bei Bremsbelägen des Standes der Technik.

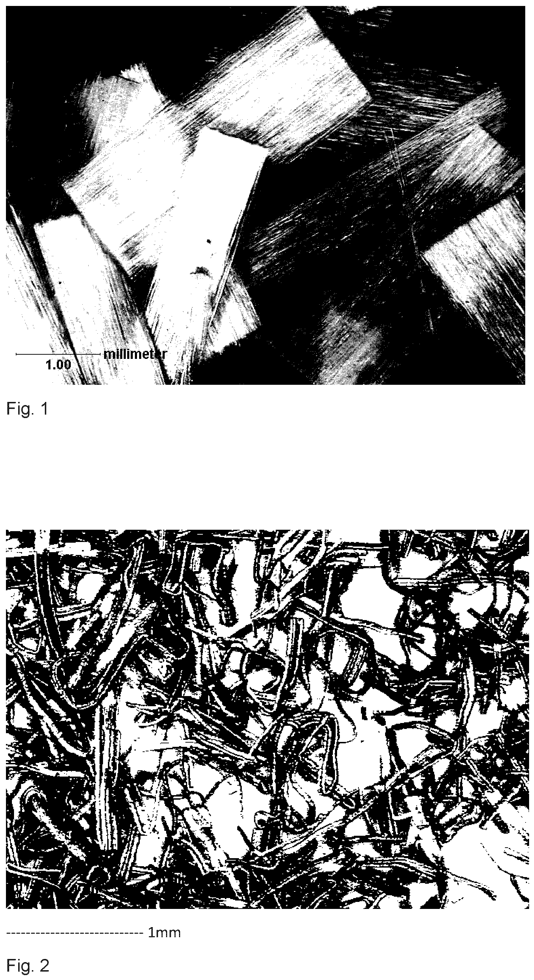

Fig. 1 zeigt ein Beispiel für erfindungsgemäß einsetzbare Glasfaserbündel.
Fig. 2 zeigt ein Beispiel für erfindungsgemäß einsetzbare Metallfasern in Form von Stahlwolle.

## Patentansprüche

1. Reibbelagmischung zur Herstellung eines Bremsbelags für Trommelbremsen umfassend
mindestens 15 Gew.-% Metallfasern, bevorzugt Stahlfasern, insbesondere Stahlwolle,
mindestens 7 Gew.-% Glasfasern, in der Form von Glasfaserbündeln, mindestens 4 Gew.-% Harz und
mindestens 2 Gew.-% Reibkörner, bevorzugt mit einer Mohs-Härte von gleich oder größer als 9.

2. Reibbelagmischung nach Anspruch 1, umfassend
15-20 Gew.-% Metallfasern,
7-10 Gew.-% Glasfaserbündel,
4-9 Gew.-% Harz und
2-10 Gew.-% Reibkörner.

3. Reibbelagmischung nach Anspruch 1 oder 2, **dadurch gekennzeichnet, dass** diese zusätzlich Sulfide von Zinn, Antimon und Bismuth umfasst, bevorzugt zu gleich oder größer als 2 Gew.-%.

4. Reibbelagmischung nach einem der Ansprüche 1 bis 3, **dadurch gekennzeichnet, dass** die Reibkörner aus Al₂O₃, SiC, B₄C oder Si₃N₄ oder deren Mischungen bestehen.

5. Reibbelagmischung nach einem der Ansprüche 1 bis 4, **dadurch gekennzeichnet, dass** diese keine Schichtsilikate und keinen Flockengraphit umfasst.

6. Reibbelagmischung nach einem der Ansprüche 1 bis 5, **dadurch gekennzeichnet, dass** die Metallfasern als Stahlwolle ausgebildet sind.

7. Reibbelag für eine Trommelbremse, hergestellt aus einer Reibbelagmischung nach einem der Ansprüche 1 bis 6.

8. Reibbelag nach Anspruch 7, **dadurch gekennzeichnet, dass** dieser einen Reibwert µ von mindestens 0,3, insbesondere von 0,4 bis 0,5, aufweist.

9. Trommelbremsbelag umfassend eine Belagträgerplatte mit einer gekrümmten Oberfläche, auf der ein Reibbelag nach Anspruch 7 oder 8 angeordnet ist.

10. Trommelbremsbelag nach Anspruch 9, **dadurch gekennzeichnet, dass** das Reibmaterial zur Befestigung direkt auf die Belagträgerplatte aufgepresst ist, und dass weder Klebstoff noch eine Zwischenschicht zwischen Trägerplatte und Reibmaterial angeordnet ist.

11. Trommelbremsbelag nach Anspruch 9 oder 10, **dadurch gekennzeichnet, dass** das Reibmaterial ohne separate mechanische Befestigungshilfsmittel an der Belagträgerplatte befestigt ist, und dass keine Schrauben, Bolzen oder Nieten verwendet werden.

12. Trommelbremsbelag nach einem der Ansprüche 9 bis 11, **dadurch gekennzeichnet, dass** die Belagträgerplatte Erhebungen und/oder Vertiefungen aufweist, wobei die Vertiefungen mit Reibbelag ausgefüllt sind und die Erhebungen bis unterhalb der Verschleißgrenze in den Reibbelag hineinreichen.

13. Trommelbremsbelag nach Anspruch 12, **dadurch gekennzeichnet, dass** die Vertiefungen flächig ausgebildet und gitterförmig auf der Belagträgerplattenoberfläche angeordnet sind.

14. Trommelbremsbelag nach Anspruch 12 oder 13, **dadurch gekennzeichnet, dass** die Erhebungen als Stifte ausgebildet und bevorzugt in mehreren Reihen angeordnet und insbesondere in den flächigen Vertiefungen angeordnet sind.

15. Verfahren zur Herstellung eines Trommelbremsbelags nach einem der Ansprüche 9 bis 14 umfassend die Schritte
- Bereitstellen einer Belagträgerplatte mit einer gekrümmten Oberfläche,
- Bereitstellen einer Reibbelagmischung,
- Einfüllen der Reibbelagmischung in eine Form, wobei während und nach dem Einfüllen der Reibbelagmischung keine gesonderten Maßnahmen für eine Verteilung der Reibbelagmischung in der Form erfolgen,
- Aufpressen der Belagträgerplatte auf die in der Form befindliche Reibbelagmischung bei erhöhter Temperatur und erhöhtem Druck und
- Härtung des erhaltenen Reibbelags.

16. Verfahren nach Anspruch 15, **dadurch gekennzeichnet, dass** während und nach dem Einfüllen der Reibbelagmischung in die Form keine gesonderten Maßnahmen für eine Verteilung der Reibbelagmischung in der Form erfolgen.

17. Verwendung einer Reibbelagmischung nach einem der Ansprüche 1 bis 6 zur Herstellung eines Reibbelags nach einem der Ansprüche 7 oder 8.

18. Verwendung eines Reibbelags nach Anspruch 7 oder 8 zur Herstellung eines Trommelbremsbelags nach einem der Ansprüche 9 bis 14.
